# EUROPÄISCHE PATENTANMELDUNG

(11) **EP 1 044 606 A1**
(43) Veröffentlichungstag der Anmeldung: **18.10.2000**
(21) Anmeldenummer: 00107828.6
(22) Anmeldetag: 12.04.2000
(51) Int. Cl.: A01K 97/06

(54) **Wickelbrett**

(30) Priorität: 16.04.1999 DE 19917237
(71) Anmelder: Thürnau, Anja geb. Frost, 31029 Banteln (DE)
(72) Erfinder: Thürnau, Andreas, 31029 Banteln (DE)

(57) **Zusammenfassung**

Es ist ein Wickelbrett (10) zum Aufwickeln von aus einem Angelhaken (2) und aus einer Schnur (3) mit Schlaufe (4) bestehenden Vorfächern (1) für Angelgeräte offenbart, welches aus einem Wickelkörper (12) mit wenigstens einer an wenigstens einer kurvenförmig ausgebildeten Stirnseite (14,16) angebrachten Reihe von wenigstens zwei Stiften (40) aus festem Material zur seitlichen Führung der Schnur und zur bedarfsweisen Festlegung der Schlaufe (4) besteht, wobei der Wickelkörper (12) wenigstens teilweise aus einem weichen und/oder elastischen Material besteht, in welches der Angelhaken (2) oberflächlich eingesteckt werden kann. Erfindungsgemäß zeichnet sich das Wickelbrett (10) dadurch aus, daß die gesamte Oberfläche (24) des Wickelkörpers (12) aus einem weichen Material besteht, wobei die Oberfläche des Wickelkörpers (12) lediglich im Bereich des Scheitelpunktes der kurvenförmigen Stirnfläche (14,16) durch die Stifte (40) unterbrochen ist.

## Beschreibung

Die Erfindung betrifft ein Wickelbrett zum Aufwickeln von aus einem Angelhaken und aus einer Schnur mit Schlaufe bestehenden Vorfächern für Angelgeräte gemäß dem Oberbegriff des Anspruchs 1.

Unter einem Vorfach versteht man die Anordnung aus einem Stück Angelschnur, welche an einem Ende an einem Angelhaken festgeknotet ist, und welche an ihrem anderen Ende eine Schlaufe aufweist. Diese fabrikmäßig vorgefertigten oder in Handarbeit hergestellten Vorfächer werden zum Angeln an die Hauptschnur von Angelgeräten, insbesondere Angelruten, angebunden, wobei im Bedarfsfalle vor dem Anbinden des Vorfachs an die Hauptschnur der Angel auf die Hauptschnur Posen, Bleigewichte und dergleichen angebracht werden. Die Schnüre der Vorfächer können eine zur Hauptschnur unterschiedliche Dicke aufweisen und bestehen üblicherweise aus einem monofilen Material, wie Nylon oder Stahl, oder aus einem multifilen Material, wie Kevlar, Stahl oder Dyneema, je nach zu fangender Fischart. Auch die Länge der Schnur des Vorfachs variiert je nach zu angelnder Fischart. Die besondere Schnur des Vorfachs ist wichtig, da diese im Gegensatz zur Hauptschnur der Angel nicht nur Zugkräfte, sondern auch Kräfte des zuschnappenden Fisches aufnehmen muß.

Nach Gebrauch werden die Vorfächer auf ein sogenanntes Wickelbrett aufgewickelt, da ohne Wickelbrett die Gefahr bestünde, daß sich mehrere Schnüre von mehreren Vorfächern ineinander verwirren, daß Knickstellen in den Schnüren entstehen könnten, und daß die Hakenspitzen beschädigt werden bzw. daß diese Hakenspitzen den Benutzer verletzen könnten.

Es sind gattungsgemäße Wickelbretter bekannt, welche an ihren Stirnseiten jeweils eine Reihe von Stiften aufweisen. Die Schlaufe des Vorfachs wird um einen Stift gelegt; anschließend wird die Schnur des Vorfachs um das Wickelbrett gewickelt und gespannt; schließlich wird der Haken in den Wickelkörper eingehakt. Die üblichen im Handel erhältlichen Wickelbretter bestehen dabei aus einem Kunststoffkörper aus Hartplastik mit daran angeformten Stiften und weisen einen Einsatz auf, welcher aus einem weicheren, gegebenenfalls auch elastischen Material besteht, d. h. das Material ist so beschaffen, daß die Spitze des Angelhakens lösbar oberflächlich in das Material eingehakt werden kann.

Problematisch ist dabei, daß aufgrund der unterschiedlichen Länge der Schnüre der Vorfächer nicht immer gewährleistet ist, daß nach Umwickeln des Wickelbrettes mit der Schnur des Vorfachs der Haken des Vorfachs immer auf dem weichen Einsatz zu liegen kommt, sondern daß auch der Fall eintreten kann, daß der Haken im Bereich des harten, nicht durchstechbaren Kunststoffs zu liegen kommt. Hier muß dann entweder die Schnur des Vorfachs überdehnt werden, bis der Haken in einen Bereich gelangt, wo er in das Material eingreifen kann, oder der Haken wird so weit zurückgesetzt, bis er ebenfalls eine Stelle erreicht, in die er eingreifen kann. Beides ist nachteilig, denn eine Überdehnung der Schnur führt zur vorzeitigen Materialermüdung, das Zurücksetzen des Hakens bewirkt eine Lockerung der Schnur, so daß sie von den Stiften und vom Wickelbrett abrutschen kann, wodurch sich die Schnüre verheddern bzw. es zu Knickstellen kommen kann.

Aufgabe der Erfindung ist es daher, ein Wickelbrett der eingangs genannten Art dahingehend zu verbessern, daß ein Haken eines Vorfachs an praktisch jeder Stelle des Wickelkörpers des Wickelbrettes eingehakt werden kann, wobei das Wickelbrett einfach und preiswert herstellbar ist.

Diese Aufgabe wird auf überraschend einfache Weise mit einem Wickelbrett der eingangs geschilderten Art gelöst, welches die Merkmale des Anspruchs 1 aufweist.

Der Erfindung liegt also die überraschend einfache Erkenntnis zugrunde, daß sich die Aufgabe dadurch lösen läßt, daß die gesamte Oberfläche des Wickelkörpers aus einem weichen Material besteht, wobei die Oberfläche des Wickelkörpers lediglich im Bereich des Scheitelpunktes der kurvenförmigen Stirnfläche durch die Stifte unterbrochen ist.

Hierdurch läßt sich die Fläche auf ein Minimum reduzieren, welche aus einem harten, das heißt nicht durchstechbaren Material besteht, nämlich der sehr schmale Bereich der Reihe von Stiften, wobei die Anzahl der Stifte frei wählbar ist. Sollte tatsächlich einmal der Fall eintreten, daß die Spitze eines Angelhakens genau im Bereich der Reihe von Stiften zu liegen kommt, reicht ein minimales Zurücksetzen des Hakens, welches so gering ist, daß nicht zu befürchten ist, daß die Schnur so lose um den Wickelkörper gelegt ist, daß hierbei eine Gefahr des Abrutschens der Schnur vom Wickelkörper zu befürchten wäre.

Hierbei lassen sich sogar Seitenflächen des Wickelkörpers dazu nutzen, separate Haken ohne Schnur einzuhaken, beispielsweise Fliegen, Blinker, Wobbler und dergleichen. Da derartige breite und relativ große Haken an den Seitenflächen des Wickelkörpers befestigt werden können, liegen sie dann nicht über den Schnüren der Vorfächer, so daß dann auch die Vorfächer wieder vom Wickelkörper einfach und störungslos entfernt werden können.

In praktischen Ausgestaltungen der Erfindung ist die Reihe von Stiften ein separates, mit dem Wickelkörper verbundenes Teil, wobei die Reihe von Stiften ein Zahnkamm mit einer Vielzahl von Zähnen sein kann, und es kann weiter vorgesehen sein, daß der Wickelkörper aus PU-Schaum, aus PE-Schaum, aus Polystyrol, aus Kautschuk oder auch Kork besteht.

In praktischen Weiterbildungen der Erfindung ist der Wickelkörper einstückig ausgebildet und ist der Zahnkamm mit seiner den Zähnen abgewandten Seite in den Wickelkörper eingelassen.

In einer weiteren praktischen Ausgestaltung der Erfindung ist vorgesehen, daß der Zahnkamm einstückig an eine Leiste angeformt ist, wobei dann vorgesehen sein kann, daß der Wickelkörper an wenigstens einer Stirnseite eine Ausnehmung zur Aufnahme der Leiste des Zahnkammes aufweist, wobei die Breite der Ausnehmung geringer sein kann als die Dicke der Leiste. Insbesondere wenn der Wickelkörper einstückig, beispielsweise aus PU-Schaum besteht, kann die praktische Ausgestaltung der Erfindung vorteilhaft sein, wenn die Breite der Ausnehmung geringer ist als die Dicke der Leiste, da dann beim Einschieben der Leiste des Zahnkammes eine Klemmwirkung der Ausnehmung bewirkt wird. Auf diese Weise kann auf zusätzliche Befestigungsmaßnahmen, wie Klebstoff oder dergleichen verzichtet werden.

In alternativen Ausgestaltungen der Erfindung kann vorgesehen sein, daß sich die Leiste über die gesamte Länge des Wickelkörpers erstreckt, wobei weiter vorgesehen sein kann, daß die Leiste an jedem ihrer Enden mit einem Zahnkamm versehen ist, und ferner kann bei dieser Ausgestaltung vorgesehen sein, daß der Wickelkörper aus zwei Hälften besteht, welche die Leiste umschließen. In diesem Fall würde die Leiste mit ihren beidseitigen Zahnkämmen als Kern des Wickelkörpers dienen, was aus produktionstechnischen oder statischen Gründen vorteilhaft sein kann. Bei dieser Ausgestaltung können beispielsweise die beiden Hälften des Wickelkörpers an die als Kern dienende Leiste angeschäumt oder angeklebt sein.

In einer weiteren vorteilhaften Ausgestaltung der Erfindung ist vorgesehen, daß wenigstens eine Seite des Wickelkörpers eine Ausnehmung mit durchgehender Bohrung zur Aufnahme eines Drillingshakens eingebracht ist. Bei normalem Einhaken eines Hakens des Drillingshakens würden nämlich die beiden anderen Spitzen von Wickelbrett abstehen, so daß die Gefahr bestünde, daß diese Spitzen entweder stumpf werden oder eine Verletzungsgefahr darstellen. Ist aber in den Wickelkörper eine Ausnehmung zur Aufnahme von Drillingshaken eingebracht, so läßt sich der Drillingshaken so versenken, daß alle drei Spitzen des Drillingshakens in das weichere Material des Wickelkörpers eingreifen bzw. einhaken. Hierbei ist es zwar nicht möglich, die Schlaufe der Schnur des Vorfachs um einen Stift bzw. Kamm zu legen, da hier, anders als bei der zuvor beschriebenen Vorgehensweise, zunächst der Haken und nicht die Schnur in Position gebracht werden muß, jedoch läßt sich dann die Schnur beispielsweise - was gemäß einer weiteren praktischen Ausgestaltung der Erfindung vorgesehen ist - durch eine Stecknadel an beliebiger Stelle des Wickelkörpers festlegen.

Einem ähnlichen Zweck dient eine weitere praktische Ausgestaltung der Erfindung, daß nämlich vorgesehen sein kann, daß in wenigstens eine Seite des Wickelkörpers ein Absatz zur Aufnahme eines Raubfischhakens eingebracht ist. Auch hier wird zunächst ein relativ großer Einzelhaken bzw. ein Zwillingshaken in diesen Absatz eingehakt und danach wird die Schnur des Vorfachs um das Wickelbrett herumgewickelt und durch beispielsweise eine Stecknadel am Wickelkörper festgelegt.

Weitere Vorteile der Erfindung werden anhand von Ausführungsbeispielen in der nachfolgenden Beschreibung, der Zeichnung und den Ansprüchen beschrieben. In der Zeichnung zeigt:
- Fig. 1: ein erstes Ausführungsbeispiel eines erfindungsgemäßen Wickelbretts in perspektivischer Darstellung,
- Fig. 2: ein zweites Ausführungsbeispiel eines erfindungsgemäßen Wickelbretts im Längsschnitt,
- Fig. 3: ein drittes Ausführungsbeispiel eines erfindungsgemäßen Wickelkörpers im Längsschnitt, und
- Fig. 4: einen Teilbereich des ersten Ausführungsbeispiels des erfindungsgemäßen Wickelbretts aus Fig. 1 im Schnitt.

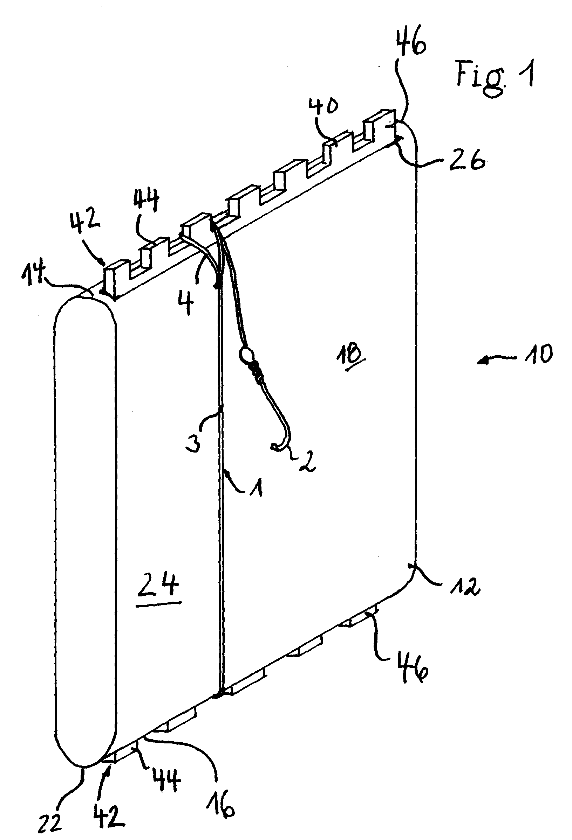

In Fig. 1 ist ein erstes Ausführungsbeispiel eines erfindungsgemäßen Wickelbretts 10 in perspektivischer Darstellung gezeigt. Das Wickelbrett 10 besteht aus einem einstückigen Wickelkörper 12 und aus zwei Reihen 42 von Stiften 40, welche als Zähne 44 ausgebildet sind. Die Zähne 44 dienen der seitlichen Führung von Vorfächern 1, von denen in Fig. 1 nur eines dargestellt ist, und zur bedarfsweisen Festlegung einer Schlaufe 4 einer Schnur 3 des Vorfachs 1, wobei die Schnur 3 an ihrem der Schlaufe 4 abgewandten Ende an einen Angelhaken 2 geknotet ist.

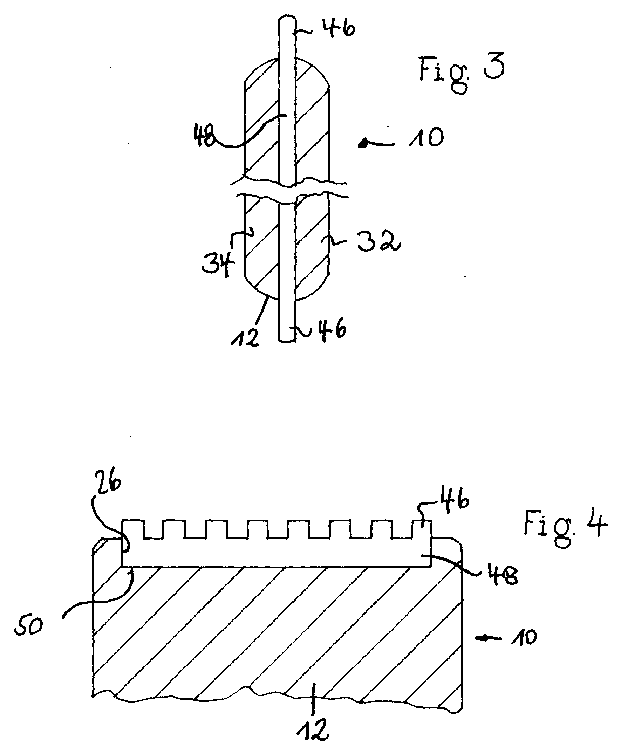

Im gezeigten Ausführungsbeispiel gemäß Fig. 1 ist der Wickelkörper 12 ein einstückiger Körper aus einem weichen Material, beispielsweise PU-Schaum. Etwa im Bereich eines Scheitelpunktes 22 von kurvenförmig ausgebildeten Stirnseiten 14, 16 ist die Reihe 42 von Zähnen 44 eingelassen. Diese Reihe 42 von Zähnen 44 stellt sich als Zahnkamm 46 dar, der aus einem harten, nicht durchstechbaren Material besteht. Wie in Fig. 4 zu erkennen, ist der Zahnkamm 46 einstückig an eine Leiste 48 angeformt, wobei ein Ende 50 der Leiste 48 in den Wickelkörper 12 eingelassen ist. Hierzu weist der Wickelkörper 12 eine Ausnehmung 26 auf, deren Breite geringer ist als die Dicke der Leiste 48.

Durch die einstückige Ausbildung des Wickelkörpers 12 besteht dessen gesamte Oberfläche 24 aus einem weichen, für den Haken 2 durchdringbaren Material, insbesondere aus PU-Schaum.

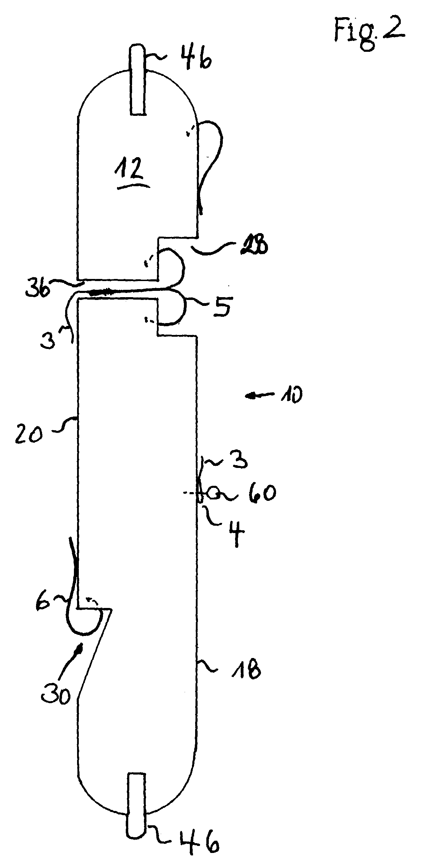

In Fig. 2 ist im Längsschnitt eine zweite Ausführungsform des erfindungsgemäßen Wickelbrettes 10 dargestellt. Prinzipiell weist dieses Wickelbrett 10 aus Fig. 2 den gleichen Aufbau wie das in Fig. 1 dargestellte Wickelbrett 10 auf. Zusätzlich weist das in Fig. 2 dargestellte Wickelbrett 10 an seiner Vorderseite 18 aber noch eine Ausnehmung 28 mit durchgehender Bohrung 36 auf, wobei Ausnehmung 28 und Bohrung 36 dazu dienen, einen Drillingshaken 5 aufzunehmen. Ferner befindet sich in der Rückseite 20 des Wickelbretts 10 aus Fig. 2 noch ein Absatz 30, welcher dazu dient, einen relativ großen Raubfischhaken 6 aufzunehmen. Dieser Raubfischhaken 6 kann ein einfacher Haken oder ein Zwillingshaken sein.

Da bei beiden Ausführungsformen zunächst der Haken in die Ausnehmung 28 bzw. den Absatz 30 eingeführt werden muß, ist es hierbei nötig, die Schnur 3 um das Wickelbrett 10 herumzuwickeln, wonach an entsprechender Stelle die Schlaufe 4 der Schnur 3 durch eine Stecknadel 60 festgelegt wird.

In Fig. 3 ist eine dritte Ausführungsform eines erfindungsge-mäßen Wickelbrettes 10 im Längsschnitt in schematischer Darstellung gezeigt. Dieses Wickelbrett 10 aus Fig. 3 weist zwei Zahnkämme 46 auf, welche einstückig an eine Leiste 48 angeformt sind. Die Leiste 48 befindet sich in der Mitte des Wickelkörpers 12, welcher im in Fig. 3 dargestellten Ausführungsbeispiel aus zwei Hälften 32, 34 besteht. Die Leiste 48 stellt sich somit als eine Art Kern dar, welcher dem Wickelbrett 10 eine höhere Stabilität verleiht.

## Patentansprüche

1. Wickelbrett (10) zum Aufwickeln von aus einem Angelhaken (2) und aus einer Schnur (3) mit Schlaufe (4) bestehenden Vorfächern (1) für Angelgeräte, bestehend aus einem Wickelkörper (12) mit wenigstens einer an wenigstens einer kurvenförmig ausgebildeten Stirnseite (14; 16) angebrachten Reihe (42) von wenigstens zwei Stiften (40) aus festem Material zur seitlichen Führung der Schnur und zur bedarfsweisen Festlegung der Schlaufe (4), wobei der Wickelkörper (12) wenigstens teilweise aus einem weichen und/oder elastischen Material besteht, in welches der Angelhaken (2) oberflächlich eingesteckt werden kann, **dadurch gekennzeichnet,** daß die gesamte Oberfläche (25) des Wickelkörpers (12) aus einem weichen Material besteht, wobei die Oberfläche (24) des Wickelkörpers (12) lediglich im Bereich des Scheitelpunktes (22) der kurvenförmigen Stirnfläche (14; 16) durch die Stifte (40) unterbrochen ist.

2. Wickelbrett nach Anspruch 1, **dadurch gekennzeichnet,** daß die Reihe (42) von Stiften (40) ein separates, mit dem Wickelkörper (12) verbundenes Teil ist.

3. Wickelbrett nach Anspruch 1 oder 2, **dadurch gekennzeichnet,** daß die Reihe (42) von Stiften (40) ein Zahnkamm (46) mit einer Vielzahl von Zähnen (44) ist.

4. Wickelbrett nach einem der Ansprüche 1 - 3, **dadurch gekennzeichnet,** daß der Wickelkörper (12) aus PU-Schaum, aus PE-Schaum, aus Polystyrol, aus Kautschuk oder aus Kork besteht.

5. Wickelbrett nach einem der Ansprüche 1 bis 4, **dadurch gekennzeichnet,** daß der Wickelkörper (12) einstückig ist.

6. Wickelbrett nach einem der Ansprüche 1 bis 5, **dadurch gekennzeichnet,** daß der Zahnkamm (46) mit seiner den Zähnen (44) abgewandten Seite in den Wickelkörper eingelassen ist.

7. Wickelbrett nach einem der Ansprüche 2 bis 6, **dadurch gekennzeichnet,** daß der Zahnkamm (46) einstückig an eine Leiste (48) angeformt ist.

8. Wickelbrett nach Anspruch 7, **dadurch gekennzeichnet,** daß der Wickelkörper (12) an wenigstens einer Stirnseite (14; 16) eine Ausnehmung (26) zur Aufnahme der Leiste (48) des Zahnkammes (46) aufweist.

9. Wickelbrett nach Anspruch 8, **dadurch gekennzeichnet,** daß die Breite der Ausnehmung (26) geringer ist als die Dicke der Leiste (48).

10. Wickelbrett nach einem der Ansprüche 7 bis 9, **dadurch gekennzeichnet,** daß sich die Leiste (48) über die gesamte Länge des Wickelkörpers (12) erstreckt.

11. Wickelkörper nach einem der Ansprüche 7 bis 10, **dadurch gekennzeichnet,** daß die Leiste (48) an jedem ihrer Enden (50) mit einem Zahnkamm (46) versehen ist.

12. Wickelbrett nach Anspruch 11, **dadurch gekennzeichnet,** daß der Wickelkörper (12) aus zwei Hälften (32, 34) besteht, welche die Leiste (48) umschließen.

13. Wickelbrett nach einem der Ansprüche 1 bis 12, **dadurch gekennzeichnet,** daß in wenigstens einer Seite (18, 20) des Wickelkörpers (12) wenigstens eine Ausnehmung (28) mit durchgehender Bohrung (36) zur Aufnahme eines Drillingshakens (5) eingebracht ist.

14. Wickelkörper nach einem der Ansprüche 1 bis 13, **dadurch gekennzeichnet,** daß in wenigstens einer Seite (18, 20) des Wickelkörpers (12) ein Absatz (30) zur Aufnahme eines Raubfischhakens (6) eingebracht ist.

15. Wickelbrett nach Anspruch 13 oder 14, **dadurch gekennzeichnet,** daß die Schlaufe (4) des Vorfachs (1) mittels einer Stecknadel (60) am Wickelkörper (12) festlegbar ist.
